# EUROPÄISCHE PATENTSCHRIFT

(11) **EP 2 957 161 B1**
(45) Veröffentlichungstag und Bekanntmachung des Hinweises auf die Patenterteilung: **14.03.2018**
(21) Anmeldenummer: 15401057.3
(22) Anmeldetag: 04.06.2015
(51) Int. Cl.: A01C 7/10, A01C 17/00, A01C 21/00

(54) **VERFAHREN ZUM BESTIMMEN EINER VERTEILUNG VON DÜNGERKÖRNERN**
METHOD FOR DETERMINING A DISTRIBUTION OF FERTILIZER GRAINS
PROCEDE DESTINE A DETERMINER LA DISTRIBUTION DE GRAINES D'UN EPANDAGE D'ENGRAIS

(30) Priorität: 18.06.2014 DE 102014108561
(43) Veröffentlichungstag der Anmeldung: 23.12.2015
(73) Patentinhaber: Amazonen-Werke H. Dreyer GmbH & Co. KG, 49205 Hasbergen (DE)
(72) Erfinder: Scheufler, Bernd, 49205 Hasbergen (DE); Rahe, Florian, 49504 Lotte (DE)

(56) Entgegenhaltungen:
- EP-A1- 1 269 818
- WO-A1-95/24823
- DE-A1-102008 052 269

## Beschreibung

Die Erfindung betrifft ein Verfahren zum Bestimmen einer Verteilung von Düngerkörnern gemäß des Oberbegriffes des Patentanspruches 1.

Ein derartiges Verfahren und Vorrichtung zum Bestimmen einer Verteilung von Düngerkörnern ist in der früheren, jedoch nicht vorveröffentlichten deutschen Patentanmeldung DE 10 2014 039 964.5 beschrieben.

Desweiteren wird in der WO 95/24823 eine Vorrichtung und ein Verfahren zur Analyse der Streueigenschaften eines Düngers offenbart.
Hier jetzt neu vorliegender Sachverhalt: Mischdünger werden eingesetzt um Nutzpflanzen Nährstoffkomponenten so zuzuführen dass sich dem Bedarf entsprechen. Dazu werden in Mischstationen die verschiedenen Nährstoffkomponenten individuell zusammengemischt.
Hier jetzt neu vorliegendes Problem, speziell beim Ausbringen von Mischdünger mit Zentrifugaldüngerstreuern:
Während des Streuvorgangs (insbesondere vom Abschleudervorgang der Düngerpartikel von den rotierenden Wurfschaufeln der Schleuderscheiben, dem Flug durch die Luft bis Auftreffen auf der zu bestreuenden Bodenfläche) ändert sich das Mischungsverhältnis durch die Dosierung, durch die Beschleunigung auf den Wurfschaufeln durch die Bewegung in der Luft. D.h. das Mischungsverhältnis entspricht nicht mehr dem Ursprünglichen.
In der Praxis wird dies vereinfacht so umschrieben: Es findet eine Entmischung des Düngers der ursprünglich quasi homogenen Düngermischung statt.
Der Erfindung liegt die Aufgabe zu Grunde, in einfacher Weise den Grad der Entmischung bzw. den Veränderungsgrad der ursprünglich homogenen Mischung des Mischdüngers nach dem Ausstreuen festzustellen.

Diese Aufgabe wird erfindungsgemäß dadurch gelöst, dass mit Hilfe einer Recheneinheit (9) eine Bildauswertung durchgeführt wird, um festzustellen wie sich das Mischungsverhältnis durch das Streuen ändert und/oder geändert hat. Vereinfacht ausgedrückt: Es wird also eine Bildauswertung in Verbindung mit Mischdüngern durchgeführt. Mittels einer Bildaufnahme durch eine geeignete Sensorik oder Kamera in Verbindung mit einem entsprechenden Auswerteprogramm lässt sich in einfacher Weise das in der DE 10 2014 039 964.5 beschriebene Verfahren in modifizierter Form auch bei Mischdünger einsetzen. Gemäß einer Ausgestaltung der Erfindung ist vorgesehen, dass in Messschalen der Dünger gesammelt wird oder der sich auf Haftflächen festsetzt und damit zur Bildauswertung genutzt werden kann. Hierdurch lässt sich mit einer entsprechenden Auswerteroutine, die in einem geeigneten Speicher eines Rechners, der auch mobil ausgestaltet sein kann, hinterlegt ist, die entsprechende Auswertung zur Ermittlung des Mischungsverhältnisses bzw. der Entmischung des ausgestreuten Mischdüngers, wie er auf der zu bestreuenden Fläche tatsächlich verteilt ist, ermitteln.
In einfacher Weise lässt sich die Auswertung dadurch vornehmen, dass im Rechner Algorithmen installiert sind, um neue Einstellwerte zu berechnen, die ein bestmögliches Mischungsverhältnis gewährleisten. Entsprechend dieser ermittelten Einstellwerte lässt sich der Düngerstreuer entsprechend der angezeigten Werte und/oder durch entsprechende Aktoren, die von dem Rechner angesteuert werden, in optimierter Weise einstellen und/oder nachjustieren.
In einer Ausgestaltung ist bei der Auswertung vorgesehen, dass der Düngerkomponente Stickstoff bei Festlegung der Einstellwerte eine Priorität eingeräumt wird, was den Entmischungsgrad betrifft.
Um in vereinfachter und anwendungsfreundlicher Weise die gewünschte Auswertung und Ermittlung des Mischungsverhältnisses zu ermitteln, ist vorgesehen, dass ein APP für Smartphone zur Verfügung steht, welche die oben beschrieben Verhältnisse berücksichtigt.

Eine bevorzugte Ausführungsform der erfindungsgemäßen Vorrichtung ist in der Zeichnung dargestellt. Es zeigen:
Fig. 1 eine schematische Darstellung der erfindungsgemäßen Vorrichtung und von erfindungsgemäß aufgenommenen Kamerabildern; und P14-057
Fig. 2 eine schematische Darstellung einer erfindungsgemäßen Haftmatte/-platte.

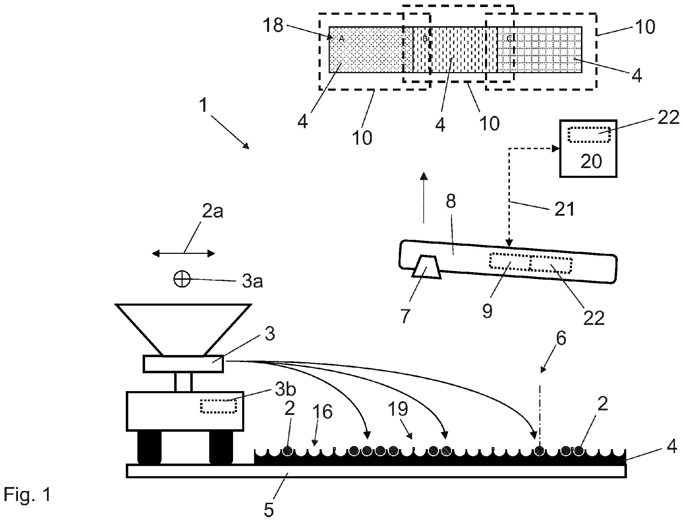

Wie die Fig. 1 erkennen lässt, umfasst die erfindungsgemäße Vorrichtung 1 zum Bestimmen einer örtlichen Verteilung von Düngerkörnern 2, die von einem Düngerstreuer 3 insbesondere in einer Richtung 2a quer zu dessen Fahrtrichtung 3a ausgestreut werden, wenigstens eine Haftmatte/-platte 4, die im Wesentlichen quer zur Fahrtrichtung 3a auf einer Ackerfläche 5 oder dergleichen ausgelegt wird. Die nachfolgend noch ausführlicher beschriebene und zum besseren Verständnis nicht größenmaßstäblich dargestellte Haftmatte/-platte 4 ist derart ausgebildet, dass sie vom Düngerstreuer 3 weg geschleuderte Düngerkörner 2 im Wesentlichen am Ort 6 ihres Auftreffens einfängt und festhält.

Es ist ferner eine Kamera 7 vorhanden, die vorzugsweise in ein Mobilfunkgerät 8, wie beispielsweise ein Mobiltelefon, integriert ist. In das Mobilfunkgerät 8 integriert ist ferner eine Recheneinheit 9, die zur Bildauswertung von Kamerabildern 10 ausgebildet ist, in denen die mit Düngerkörnern 2 bestreute Haftmatte/-platte 4 in einer Draufsicht abgebildet wird. Hierfür können mehrere Haftmatten/-platten 4 aneinander gelegt werden, wie dies in der Fig. 1 oben schematisch angedeutet ist. Ebenso wäre es denkbar, die Haftmatte/-platte 4 als streifenförmige flexible Bahn auszubilden, die sich beispielsweise ausrollen lässt.

Der von der wenigstens einen Haftmatten/-platte 4 bedeckte Bodenbereich wird vorzugsweise in überlappenden Kamerabildern 10 abgebildet, derart, dass sich die Kamerabilder 10 für die Bildauswertung zu einem virtuellen Panoramabild oder dergleichen zusammensetzen lassen.

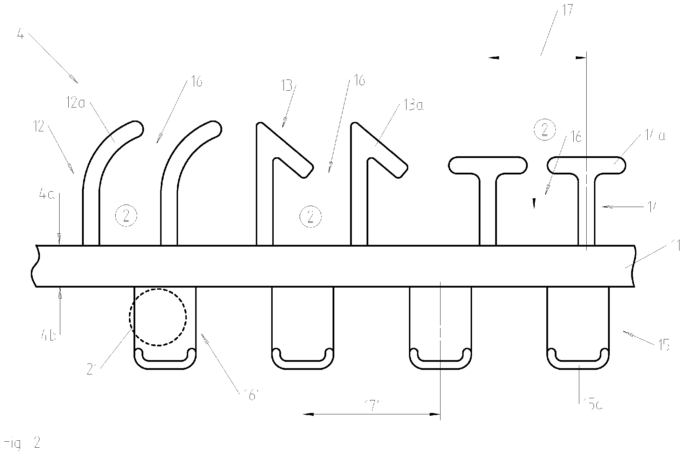

Bevorzugte Ausführungsformen der Haftmatte/-platte 4 mit unterschiedlichen erfindungsgemäß abstehenden Strukturen zum Auffangen und Festhalten der Düngerkörner sind in der Fig. 2 beispielhaft schematisch dargestellt. Es ist sowohl möglich, nur einen Typ dieser Strukturen als auch beliebige Kombinationen dieser Strukturen auf der Haftmatte/-platte 4 in einer rasterförmigen Verteilung auszubilden. Beispiele für derartige erfindungsgemäße Raster sind in der Fig. 1 oben in der Draufsicht schematisch angedeutet.

Demnach umfasst die Haftmatte/-platte 4 eine Trägerschicht 11, auf der schematisch angedeutete Stäbchen 12, 13, 14 und/oder Zungen 15 derart abstehen, dass sie auftreffende Düngerkörner 2 in zwischen den Stäbchen 12 bis 14 und/oder Zungen 15 ausgebildeten Auffangräumen 16 einfangen und somit im Wesentlichen am Ort 6 ihres Auftreffens festhalten. Dies wird im Sinne der Erfindung als ein Anhaften der Düngerkörner 2 an/auf der Haftmatte/-platte 4 verstanden.

Die Stäbchen 12 bis 14 und/oder Zungen 15 können an ihrem freien Ende Haken 12a, 15a, Widerhaken 13a und/oder Pilzköpfe 14a aufweisen, wie dies in der Fig. 2 schematisch angedeutet ist. Vorzugsweise sind die Stäbchen 12 bis 14 und/oder Zungen 15, insbesondere die daran ausgebildeten Haken 12a, 15a, Widerhaken 13a und/oder Pilzköpfe 14a, elastisch verformbar, um die Düngerkörner 2 beim Auftreffen, möglichst sanft abzubremsen, in die dazwischen ausgebildeten Auffangräume 16 zu leiten und darin festzuhalten.

In der Fig. 2 ist ferner schematisch angedeutet, dass die Stäbchen 12 bis 14 und/oder Zungen 15 auf einer ersten wirksamen Seite 4a und auf einer zweiten wirksamen Seite 4b der Haftmatte/-platte 4 ausgebildet sein können. Um Düngerkörner 2, 2' unterschiedlicher Größe optimal einzufangen, können sich die auf unterschiedlichen wirksamen Seiten 4a, 4b ausgebildeten Stäbchen 12 bis 14 und/oder Zungen 15 hinsichtlich der zwischen ihnen ausgebildeten Auffangräume 16, 16' unterscheiden, insbesondere hinsichtlich der Grundfläche und/oder Höhe der Auffangräume 16, 16' und/oder hinsichtlich ihrer Rasterweite 17 bzw. 17'.

In der Fig. 2 sind die Stäbchen 12 bis 14 in einer seitlichen Ansicht und die Zungen 15 in einer Vorderansicht dargestellt. Dies dient lediglich dem besseren Verständnis. Die Stäbchen 12 bis 14 und/oder Zungen 15 lassen sich in beliebiger Orientierung zueinander anordnen, um ein an bestimmte Düngerkörner 2, 2' angepasstes Auffangraster erfindungsgemäß auszubilden.

Die wirksamen Seiten 4a und 4b der Haftmatte/-platte 4, also die entsprechenden Seiten der Trägerschicht 11 und die davon erfindungsgemäß abstehenden Strukturen, können sich insbesondere hinsichtlich ihrer Farbe und/oder Graustufe unterscheiden, um einen geeigneten Bildkontrast in den Kamerabildern 10 auch für unterschiedlich helle und/oder gefärbte Düngerkörner 2, 2' zu erzielen.

Vorzugsweise ist wenigstens eine wirksame Seite 4a, 4b der Haftmatte/-platte 4 nicht heller als Graustufe 50%, wie beispielsweise 122 von 255 (weiß). Damit lassen sich die meisten Düngersorten aufgrund ihrer überwiegend hellen Färbung besonders kontrastreich auf der Haftmatte/-platte 4 in den Kamerabildern 10 darstellen. Farbe und/oder Graustufe der wirksamen Seiten 4a, 4b lassen sich nahezu beliebig an spezielle Düngersorten anpassen.

Auf den Haftmatten/-platten 4 können ferner Identifikationsmarkierungen 18 zu deren Identifizierung in den Kamerabildern 10 und/oder Positionierungsmarkierungen 19 für ein lückenloses oder überlappendes Aneinanderreihen mehrerer Kamerabilder 10 vorhanden sein. Beispielsweise kann ein durchnummerierter Satz Haftmatten/-platten 4 in mehreren Kamerabildern 10 aufgenommen und bei der Bildauswertung dann in korrekter Reihenfolge aneinandergesetzt und ausgewertet werden. Entsprechend lässt sich daraus eine örtliche Verteilung der Düngerkörner 2 auf den, und insbesondere entlang mehrerer, Haftmatten/-platten 4 berechnen. Ist die Haftmatte/-platte 4 beispielsweise als ausrollbarer Streifen ausgebildet, der sich nicht in einem einzelnen Kamerabild 10 abbilden lässt, so dienen vorzugsweise in Längsrichtung der Haftmatte/-platte 4 verteilte Positioniermarkierungen 19 dazu, mehrere Kamerabilder 10 in der richtigen Reihenfolge und lückenlos für die Bildauswertung aneinander zu reihen.

Die Trägerschicht 11 kann sowohl starr als auch flexibel ausgebildet sein. Die Stäbchen 12 bis 14 und/oder Zungen 15 sind vorzugsweise elastisch verformbar ausgebildet, so dass auftreffende Düngerkörner 2 in geeigneter Weise eingefangen und festgehalten werden. Die Stäbchen 12 bis 14 und/oder Zungen 15 und die Trägerschicht 11 sind vorzugsweise derart ausgebildet, dass sich die eingefangenen Düngerkörner 2 nach der Messung der Verteilung der Düngerkörner 2 aus den Auffangräumen 16 wieder ausklopfen lassen. Somit können Fehler auf Grund von Düngerresten bei späteren Messungen vermieden werden.

Die Größe der Auffangräume 16 ist derart an die Größe der einzufangenden Düngerkörner 2, 2' angepasst, dass die Düngerkörner 2, 2' des ausgestreuten Mischdüngers im Wesentlichen am Ort 6 ihres Auftreffens auf der Haftmatte/- platte 4 liegend in einer Draufsicht Bild gebend registriert werden können. Darunter ist zu verstehen, dass entweder einzelne Düngerkörner 2, 2' erkannt werden und/oder eine in einem Auffangraum 16 vorhandene Gruppe von Düngerkörnern 2, 2' erkannt und ausgewertet wird. Unter einer Einsehbarkeit der Auffangräume 16, 16' von oben ist hierbei definitionsgemäß zu verstehen, dass sich Bild gebend in der orthogonalen Draufsicht auf einen Auffangraum 16, 16' erkennen lässt, ob sich darin wenigstens ein Düngerkorn 2, 2' befindet.

Beispielsweise könnten Auffangräume 16 für Düngerkörner 2 mit Durchmessern von 1 bis 3 mm mit einer Rasterweite von 6 mm vorhanden sein. Ein einzelner Auffangraum 16 könnte dann sowohl ein einzelnes Düngerkorn mit 3 mm Durchmesser aufnehmen als auch vier Düngerkörner mit 1 mm Durchmesser. Selbst für den Fall, dass die Bildauswertung dies nicht unterscheidet und lediglich den Auffangraum 16 als gefüllt erkennt, wäre der dadurch verursachte Quantifizierungsfehler hinnehmbar, zumal lediglich eine relative Verteilung der Düngerkörner 2 über die Messfläche benötigt wird, insbesondere lediglich in einer Richtung 2a quer zur Fahrtrichtung 3a.

Geeignete lichte Weiten der Auffangräume 16 liegen vorzugsweise im Bereich von 2 bis 5 mm. Damit lassen sich Düngerkörner 2 herkömmlicher Düngersorten, die beispielsweise Korngrößen von 1 mm bis 3 mm aufweisen, in den Auffangräumen 16 einzeln und/oder in geeignet kleinen Gruppen von beispielsweise höchstens fünf Düngerkörnern 2 auffangen. Je nach dem Profil der zwischen den Auffangräumen 16 abstehenden Stäbchen 12 bis 14 und/oder Zungen 15 ergeben sich daraus günstige Rasterweiten 17 von etwa 5 bis 10 mm. Diese Werte lassen sich jedoch an die auszustreuende Düngersorte nach Belieben anpassen.

Die Rasterweite 17 muss nicht zwangsläufig in beiden Oberflächendimensionen (Länge und Breite) der Haftmatte/-platte 4 identisch sein, da im Grunde nur eine Düngerverteilung quer zur Fahrtrichtung 3a zu bestimmen ist. Gegebenenfalls ist die Rasterweite 17 dann in der Richtung des jeweils kleineren Rasters definiert, das vorzugsweise in Längsrichtung der Haftmatte/-platte 4 ausgebildet ist.

Die vorliegende Erfindung ermöglicht die Bild gebende Auswertung der Düngerverteilung durch Registrieren einzelner Düngerkörner 2 und/oder kleiner Gruppen von Düngerkörnern 2 des Mischdüngers in den Kamerabildern 10 im Wesentlichen am Ort 6 ihres Auftreffens. Die Verteilung wird somit an den auf der Haftmatte/-platte 4 liegenden Düngerkörnern 2 des Mischdüngers gemessen, insbesondere unmittelbar auf dem vom Düngerstreuer befahrenen Bodenbereich 5. Im Gegensatz dazu ist ein Sammeln der Düngerkörner in herkömmlichen Auffangrastern zu sehen, mit einer Auswertung nach Entnahme und Transfer der gesammelten Düngerkörner, beispielsweise mit einer Waage.

Hierbei kann durch eine erfindungsgemäße Bildauswertung festgestellt werden, wie sich das Mischungsverhältnis ändert und/oder geändert hat. Hierzu wird in Messschalen der Dünger gesammelt, z. B durch das Festsetzen auf Haftflächen und so zur Bildauswertung zu nutzen. Hierfür sind im Rechner Algorithmen installiert sind, um neue Einstellwerte zu berechnen, die ein Bestmögliches Mischungsverhältnis gewährleisten.

Hierbei wird der Düngerkomponente Stickstoff bei Festlegung der Einstellwerte eine Priorität eingeräumt wird, was den Entmischungsgrad betrifft.

Durchgeführt werden kann dies in leichter Weise durch ein zur Verfügung stehendes APP für Smartphone, welche die oben beschrieben Verhältnisse berücksichtigt.

Erfindungsgemäß lässt sich mit der Vorrichtung 1 beispielsweise wie folgt arbeiten:

Wenigstens eine Haftmatte/-platte 4 wird im Wesentlichen quer zur Fahrrichtung 3a oder Fahrspur des Düngerstreuers 3 ausgelegt. Beim Vorbeifahren des Düngerstreuers 3 an der wenigstens einen Haftmatte/-platte 4 werden Düngerkörner 2 bei vorgegebenen Ist-Einstellwerten (Maschinenparametern) des Düngerstreuers 3 ausgestreut und dabei von der Haftmatte/-platte 4 im Wesentlichen jeweils am Ort 6 ihres Auftreffens eingefangen.

Die eingefangenen Düngerkörner 2 des Mischdüngers werden auf der Haftmatte/- platte 4 liegend in einer Draufsicht in wenigstens einem Kamerabild 10 digital abgebildet und dieses in der Recheneinheit 9 ausgewertet. Durch Berechnung einer Ist-Verteilung der Düngerkörner 2 des Mischdüngers entlang der wenigstens einen Haftmatte/-platte 4 wird überprüft, ob mit den Ist-Einstellwerten des Düngerstreuers 3 ein gewünschte Verteilungsqualität des Mischdüngers erzielt wird. Ist dies nicht der Fall, werden die Ist-Einstellwerte des Düngerstreuers 3 auf der Grundlage der gemessenen Ist-Verteilung der Düngerkörner 2 des Mischdüngers , wie ausgeführt gezielt korrigiert / optimiert. Unter der Ist-Verteilung ist wie üblich die Düngermenge pro Flächeneinheit oder pro Längeneinheit, insbesondere quer zur Fahrtrichtung 3a, gemeint.

Die Ist-Einstellwerte des Düngerstreuers 3 könnten zu diesem Zweck entweder manuell am Mobilfunkgerät 8 eingegeben werden, oder von einem am Düngerstreuer 3 vorhandenen Bordcomputer 3b an die Recheneinheit 9 übermittelt werden, beispielsweise mittels drahtloser Datenverbindung mittels Bluetooth, WLAN oder dergleichen.

## Patentansprüche

1. Verfahren zum Bestimmen einer Verteilung von Düngerkörnern (2), welche mittels eines Düngerstreuers (3) durchgeführt wird, insbesondere quer zur Fahrtrichtung (3a) des Düngerstreuers (3), mit den Schritten: Ausstreuen einer Mischung von Düngerkörnern mit einer im Wesentlichen homogenen Durchmischung von verschiedenen Düngerkomponenten beim Überfahren eines Bodenbereichs (5); Abbilden des bestreuten Bodenbereichs (5) in wenigstens einem digitalen Kamerabild (10); Lokalisieren der Düngerkörner (2) im Kamerabild (10) und Berechnen einer Ist-Verteilung der Düngerkörner (2) auf dem Bodenbereich; **dadurch gekennzeichnet, dass** mit Hilfe einer Recheneinheit (9) eine Bildauswertung durchgeführt wird, um festzustellen wie sich das Mischungsverhältnis durch das Streuen ändert und/oder geändert hat.

2. Verfahren nach Anspruch 1, **dadurch gekennzeichnet, dass** in Messvorrichtungen, wie Messschalen und/oder Haftmatte/-platten (4), welche auf dem Bodenbereich (5) ausgelegt werden, der Dünger gesammelt wird oder der sich auf Haftflächen festsetzt und damit zur Bildauswertung genutzt werden kann.

3. Verfahren nach zumindest einem der vorstehenden Ansprüche, **dadurch gekennzeichnet, dass** in der Recheneinheit (9) Algorithmen installiert sind um neue Einstellwerte zu berechnen, die ein Bestmögliches Mischungsverhältnis gewährleisten.

4. Verfahren nach Anspruch 3, **dadurch gekennzeichnet, dass** der Düngerkomponente Stickstoff bei Festlegung der Einstellwerte des Düngerstreuers (3) eine Priorität eingeräumt wird, was den Entmischungsgrad betrifft

5. Verfahren nach zumindest einem der vorstehenden Ansprüche, **dadurch gekennzeichnet, dass** ein APP für Smartphone zur Verfügung steht, welche die Bildauswertung durchführen kann.

## Claims

1. Method for determining a distribution of fertilizer grains (2), said distribution being accomplished by means of a fertilizer spreader (3), in particular across the direction of travel (3a) of the fertilizer spreader (3), said method including the steps of: when travelling over a region of the ground (5), spreading a mixture of fertilizer grains with a substantially homogeneous mix of the various fertilizer components; imaging the bestrewn region of the ground (5) in at least one digital camera image (10); localizing the fertilizer grains (2) in the camera image (10) and calculating an actual distribution of the fertilizer grains (2) in the region of the ground; **characterized in that** an image evaluation is carried out with the aid of a computing unit (9) in order to determine how the mix ratio changes and/or is changed by the spreading.

2. Method according to Claim 1, **characterized in that** the fertilizer is collected in measurement apparatuses, such as measuring bowls and/or adhesion pads/plates (4) which are placed over the region of the ground (5), or said fertilizer settles on adhesion surfaces and it can therefore be used for image evaluation purposes.

3. Method according to at least one of the preceding claims, **characterized in that** algorithms for calculating new setting values that ensure the best possible mix ratio are installed in the computing unit (9).

4. Method according to Claim 3, **characterized in that** the fertilizer component nitrogen is prioritized in respect of the degree of separation when the setting values of the fertilizer spreader (3) are determined.

5. Method according to at least one of the preceding claims, **characterized in that** an app for a smartphone which can carry out the image evaluation is available.

## Revendications

1. Procédé pour déterminer une distribution de grains d'engrais (2), mis en oeuvre au moyen d'un épandeur d'engrais (3), en particulier transversalement à la direction de déplacement (3a) de l'épandeur d'engrais (3), comprenant les étapes consistant à : épandre un mélange de grains d'engrais avec un mélange sensiblement homogène de différents composants d'engrais lors du passage sur une surface de sol (5) ; former une image de la zone de sol sur laquelle l'épandage (5) a été effectué dans au moins une image de caméra numérique (10) ; localiser les grains d'engrais (2) dans l'image de caméra (10) et calculer une distribution effective des grains d'engrais (2) sur la zone du sol ;
**caractérisé en ce qu'**une évaluation d'image est effectuée à l'aide d'une unité de calcul (9) afin de déterminer comment le rapport de mélange varie et/ou a varié en raison de l'épandage.

2. Procédé selon la revendication 1, **caractérisé en ce que** l'engrais est recueilli dans des dispositifs de mesure, tels que des plateaux de mesure et/ou des nappes/plaques adhésives (4), qui sont disposés sur la surface de sol (5) ou qui peuvent être fixés à des surfaces adhésives et peuvent ainsi être utilisés pour l'évaluation d'images.

3. Procédé selon au moins l'une des revendications précédentes, **caractérisé en ce que** des algorithmes sont installés dans l'unité de calcul (9) pour calculer de nouvelles valeurs de réglage qui garantissent un meilleur rapport de mélange possible.

4. Procédé selon la revendication 3, **caractérisé en ce qu'**une priorité concernant le degré de ségrégation est conférée au composant azoté de l'engrais lors de la détermination des valeurs de réglage de l'épandeur d'engrais (3).

5. Procédé selon au moins l'une des revendications précédentes, **caractérisé en ce qu'**une Appli pour smartphone pouvant effectuer une analyse d'image est disponible.
